(19) Europäisches Patentamt
European Patent Office
Office européen des brevets

(11) EP 2 413 002 A1

(12) **EUROPEAN PATENT APPLICATION**

(43) Date of publication:
**01.02.2012 Bulletin 2012/05**

(51) Int Cl.:
*F16F 9/06* (2006.01)   *F16F 9/46* (2006.01)

(21) Application number: **11175186.3**

(22) Date of filing: **25.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.07.2010 IT AN20100125**

(71) Applicant: **Tenneco Marzocchi S.r.l.**
**40069 Zola Predosa (BO) (IT)**

(72) Inventors:
• **Pezzi, Enrico**
**47023 CESENA (FC) (IT)**

• **Bolognini, Federico**
**40100 BOLOGNA (BO) (IT)**
• **Frontali, Francesco**
**40064 OZZANO DELL'EMILIA (BO) (IT)**
• **Olivieri, Gianluca**
**41056 SAVIGNANO SUL PANARO (MO) (IT)**

(74) Representative: **Cutropia, Gianluigi**
**Ing. Claudio Baldi s.r.l.**
**Viale Cavallotti, 13**
**60035 Jesi (AN) (IT)**

(54) **Motorcycle fork assembly with adjustment system of compensating spring**

(57)     A fork assembly is disclosed, comprising an external tube (1) and an internal tube (2). A free piston (5) is arranged inside a cylindrical portion (30) joined with the external tube, in such a way to define an oil chamber (C4) and an air chamber (C5) wherein a compensating spring (6) is inserted. Adjustment means (8, 7) are mounted in an upper cap (10) of the fork assembly in order to adjust the pre-load of the compensating spring (6).

FIG. 3

Printed by Jouve, 75001 PARIS (FR)

**Description**

The present patent application for industrial invention relates to a motorcycle fork assembly with adjustment system of compensating spring.

As it is known, a fork assembly comprises an external tube and an internal tube mounted telescopically sliding inside the external tube. Generally, the upper end of the external tube is connected to the frame of the vehicle, whereas the lower end of the internal tube is connected to an axle of a wheel of the vehicle, or vice versa. Between the internal tube and the external tube a shock-absorbing system with oil chambers is generated.

Such a type of fork assembly comprises a cylinder joined with the external tube, wherein a free piston or compensating piston slides, generating an operation chamber filled with oil and an air chamber. During compression of the fork assembly, the oil chamber increases, whereas the air chamber decreases.

A compensating spring, which opposes the lifting of the free piston, is inserted in the air chamber.

Fork assemblies of the prior art are impaired by the fact that the compensating spring cannot be adjusted according to the user's requirements.

The purpose of the present invention is to eliminate the drawbacks of the prior art by devising a fork assembly with adjustment system of the compensating spring that is efficient, versatile, inexpensive and easy to make.

Said purpose is achieved according to the present invention, with the characteristics listed in the enclosed independent claim 1.

Advantageous embodiments appear from the dependent claims.

The motorcycle fork assembly of the present invention comprises:

- an external tube,
- an internal tube mounted telescopically sliding inside the external tube,
- a cylinder joined with the external tube and axially arranged inside the external tube,
- a stem joined with the internal tube and provided with a piston fluid-tightly sliding inside said cylinder, in such a way to define a lower oil chamber and a higher oil chamber,
- an upper cylindrical portion of said cylinder provided with a base and a valve that allows for oil passage from the upper chamber to an operation chamber in the upper cylindrical portion,
- a stem axially mounted in the upper cylindrical portion,
- a free piston that fluid-tightly slides on the stem with the internal surface of the upper cylindrical portion, in such a way to define said operation chamber and a gas chamber,
- spring means interposed between said free piston and an upper closing cap, in such a way to oppose the ascending travel of said free piston, and
- adjustment means mounted inside said upper cap to adjust compression or pre-load of said spring.

The advantages of the fork assembly of the present invention appear evident, because of the provision of adjustment means mounted in the upper cap to adjust the compensating spring in a simple, effective way.

Further characteristics of the invention will appear more evident from the detailed description below, which refers to a merely illustrative, not limiting embodiment, shown in the enclosed drawings, wherein:

Fig. 1 is a partially interrupted cross-sectional view of a fork assembly according to the invention, in completely compressed position;
Fig. 2 is an enlarged view of the upper part of the fork assembly of Fig. 1, wherein the compensating spring is in minimum pre-load condition; and
Fig. 3 is the same view as Fig. 2, showing the fork assembly of the invention, wherein the compensating spring is in maximum pre-load condition.

Referring to said figures, the fork assembly of the invention is disclosed, generally indicated with numeral (100).

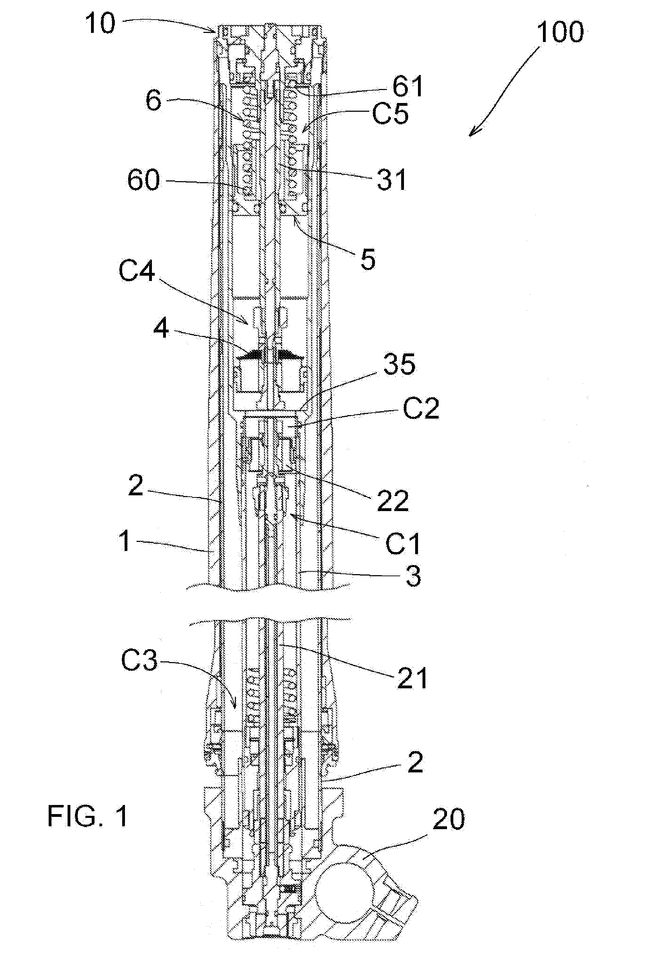

Referring to Fig. 1, the fork assembly (100) comprises an external tube (1) and an internal tube (2) mounted telescopically sliding inside the external tube (1).

The external tube (1) is provided with upper end tightly closed by an upper closing cap (10) and lower open end from which the lower part of the internal tube (2) protrudes. The internal tube (2) is provided with open end disposed inside the external tube (1) and lower closed end connected with a flange (20) adapted to be fixed to an axle of a wheel.

A cylinder (3) is joined with the upper part of the external part (1) and axially extends for the entire length of the external tube (1). The cylinder (3) has external diameter lower than the internal tube (2) in order to be axially received inside the internal tube (2).

A stem (21) is joined with the lower part of the internal tube (2) and has a lower diameter than the cylinder (3) in order to be received inside the cylinder (3). The stem (21) is provided at the upper end with a piston (22) that fluid-tightly sides inside the cylinder (3).

In this way, a lower chamber (C1) and an upper chamber (C2) are defined inside the cylinder (3) and separated by the piston (22). The lower and upper chambers (C1, C2) are filled with oil.

A valve system of known type is integrated into the piston (22) to allow for oil passage from the lower chamber (C1) to the upper chamber (C2) and vice versa, during compression and extension of the fork assembly.

Another set of valves of known type provides communication between the lower chamber (C1) of the cylinder (3) with an auxiliary tank (C3) generated outside the cylinder (3) between cylinder (3) and internal tube (2). The auxiliary tank (C3) contains oil that is necessary to fill the chambers (C1 and C2).

The cylinder (3) is provided with an upper cylindrical portion (30) with higher diameter. The upper cylindrical portion (30) is provided with a base (35) where a valve (4) is mounted. During compression of the fork assembly, the valve (4) allows for oil passage from the upper chamber (C2) towards an operation chamber (C4) in the upper cylindrical portion (30) and prevents oil passage from the operation chamber (C4) to the upper chamber (C2). Instead, during extension of the fork assembly, oil flows again from chamber (C4) to chamber (C2) by means of the valve (4).

Inside the upper cylindrical portion (30) a stem (31) is axially mounted and joined to the cylindrical portion (30). A free piston (5) or compensating piston slides on the stem (31). The lateral walls of the free piston (5) fluid-tightly slide on the internal surface of the upper cylindrical wall (30). So, the operation chamber (C4), which receives oil, is defined between the valve (4) and the free piston (5). Instead, between the free piston (5) and the upper cap (10) an air or gas chamber (C5) is defined.

The upper cap (10) is fluid-tightly inserted in the upper part of the cylindrical portion (30). A helicoidal spring (6) is disposed around the stem (31) and positioned between free piston (5) and upper cap (10), in such a way to oppose the ascending travel of the free piston (5).

The helicoidal spring (6) is provided with a first end (60) arranged in a recessed housing of said free piston (5) and a second end (61) disposed in a recessed housing of a pusher (7). The pusher (7) has a basically disc-like or cylindrical shape and is provided with external surface that fluid-tightly slides on the internal surface of the cap (10) with capability of axially moving.

The pusher (7) is provided with a threaded axial hole (70) where a threaded stem of a pre-load screw (8) is screwed. The pre-load screw (8) is rotably supported, in fluid-tightly way, by the cap (10), in such a way that it is able to move axially.

So, by rotating the pre-load screw (8), the pusher (7) is axially moved downwards or upwards, according to the rotation direction of the pre-load screw (8).

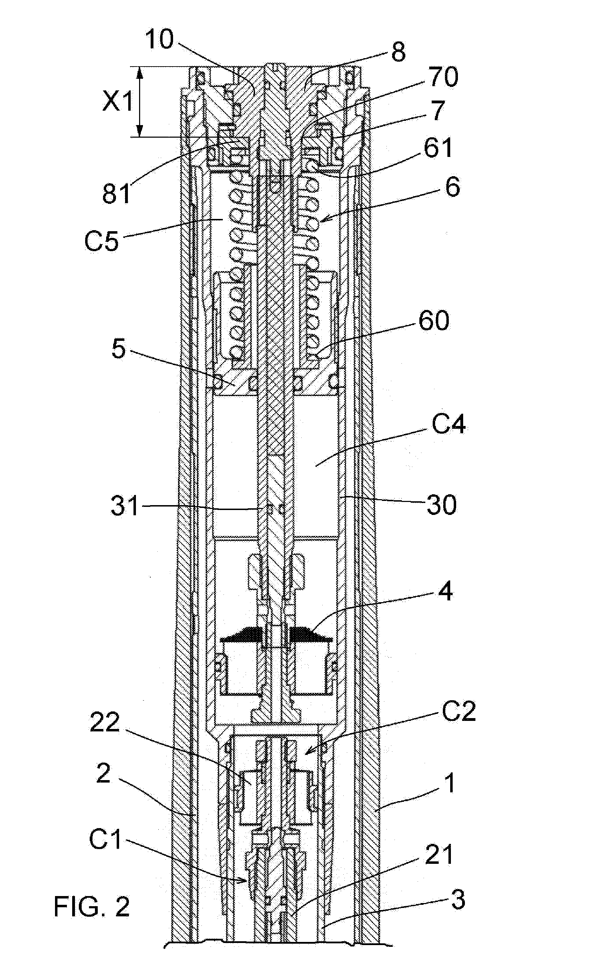

Fig. 2 shows a minimum pre-load of the spring (6), wherein the upper surface of the pusher (7) is stopped against a radial stop surface (81) of the pre-load screw (8). In such a case (X1) is used to indicate the distance between the upper surface of the pusher (7) and the upper surface of the cap (10).

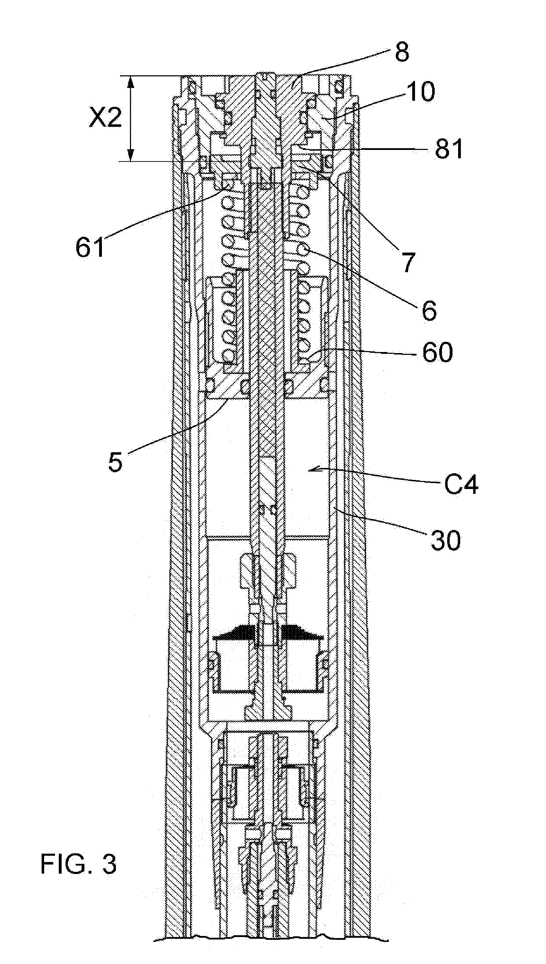

Fig. 3 shows a maximum pre-load of the spring (6), wherein the upper surface of the pusher (7) is lowered with respect to the radial stop surface (81) of the pre-load screw (8). In such a case (X2) is used to indicate the distance between the upper surface of the pusher (7) and the upper surface of the cap (10).

So the load travel of the spring (6) is equal to

$$X = X2 - X1$$

Advantageously, said load travel (X) of the spring can be comprised in 15 mm range.

It must be considered that, according to the compression travel of the fork, the compensating piston (5) will be in a position relative to said travel.

The compensating piston (5) separates the oil chamber (C4) from the air chamber (C5). The movement and speed of the compensation piston (5) are mainly opposed by the force applied by means of the spring (6).

The peculiarity of being able to adjust the pre-load of the spring (6) and consequently the force applied by it on the compensation piston (5) during its entire travel, allows for varying the force that opposes the compression of the fork. In practical terms, the user will perceive a variation in the behavior of the suspension during compression. Said adjustment will be complementary and additional with respect to the standard fork compression hydraulic adjustment.

By adjusting the threaded pre-load screw (8) joined in the translation with the cap (10) of the fork, the pusher (7) can move by a distance from (X1) to (X2). Consequently, the spring (6) can be pre-loaded in a range of predefined loads.

Numerous variations and modifications can be made to the present embodiment of the invention by an expert of the art, while still falling within the scope of the invention as claimed in the enclosed claims.

## Claims

1. Motorcycle fork assembly comprising:- an external tube (1),

   - an internal tube (2) mounted telescopically sliding inside the external tube (1),
   - a cylinder (3) joined with the external tube (1) and axially arranged inside the external tube,
   - a stem (21) joined with the internal tube (2) and provided with a piston (22) fluid-tightly sliding inside said cylinder (3) in such a way to define a lower oil chamber (C1) and a higher oil chamber (C2),
   - an upper cylindrical portion (30) of said cylinder (3) provided with a base (35) and a valve (4) that allows for oil passage from the upper chamber (C2) to an operation chamber (C3) in the upper cylindrical portion (30),
   - a stem (31) axially mounted in the upper cylindrical portion (30),
   - a free piston (5) that fluid-tightly slides on the stem (31) with the internal surface of the upper cylindrical portion, in such a way to define said operation chamber (C4) and a gas or air chamber (C5),

- spring means (6) interposed between said free piston (5) and an upper closing cap (10) in such a way to oppose the ascending travel of said free piston (5),

- adjustment means (7, 8) mounted inside said upper cap (10) to adjust compression or pre-load of said spring means (6), said adjustment means (7, 8) comprising a pusher (7) axially slidibly mounted with fluid-tight inside said upper cap (10) and a pre-load screw (8) that is screwed inside said pusher to cause axial translation of the pusher,

**characterized in that**

said spring means are a helicoidal spring (6) disposed around said stem (31) and having a first end (60) arranged in a recessed housing of said free piston (5) and a second end (61) disposed in a recessed housing of said pusher (7).

2. Fork assembly as claimed in claim 1, **characterized in that** said pre-load screw (8) is mounted inside said upper cap (10) in such a way to rotate fluid-tightly inside it, not being able to slide axially.

3. Fork assembly as claimed in claim 1 or 2, **characterized in that** said pusher (7) is mounted in said cap (10) in such a way to axially fluid-tightly slide, not being able to rotate.

4. Fork assembly as claimed in any one of the preceding claims, **characterized in that** said pre-load screw (8) has a radial stop surface (81) that engages with the upper surface of said pusher (7) when it is in minimum pre-load position of the spring.

5. Fork assembly as claimed in any one of the preceding claims, **characterized in that** said pusher (7) has axial sliding travel of approximately 15 mm.

EP 2 413 002 A1

FIG. 1

5

FIG. 2

FIG. 3

EP 2 413 002 A1

EUROPEAN SEARCH REPORT

Application Number

EP 11 17 5186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2008/230335 A1 (FURUYA KEN [JP] ET AL) 25 September 2008 (2008-09-25) * par. 31-33; Fig.1, pos.27,28; paragraphs [0007] - [0047]; claims; figures * | 1-5 | INV. F16F9/06 F16F9/46 |
| A | US 4 807 860 A (SIMONS STEPHEN W [US]) 28 February 1989 (1989-02-28) * Fig.8; column 1, line 19 - column 6, line 65; claims; figures * | 1-5 | |
| A | JP 11 280826 A (SHOWA CORP) 15 October 1999 (1999-10-15) * the whole document * | 1-5 | |

TECHNICAL FIELDS
SEARCHED     (IPC)

F16F

The present search report has been drawn up for all claims

| Place of search | Date of completion of the search | Examiner |
|---|---|---|
| The Hague | 4 October 2011 | Tiedemann, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 17 5186

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2011

| Patent document cited in search report | | Publication date | Patent family member(s) | | Publication date |
|---|---|---|---|---|---|
| US 2008230335 | A1 | 25-09-2008 | CN 101270792 A | | 24-09-2008 |
| | | | JP 2008232325 A | | 02-10-2008 |
| US 4807860 | A | 28-02-1989 | NONE | | |
| JP 11280826 | A | 15-10-1999 | JP 4049883 B2 | | 20-02-2008 |

For more details about this annex : see Official Journal of the European Patent Office, No. 12/82